# NEUE EUROPÄISCHE PATENTSCHRIFT

(11) **EP 3 618 758 B2**
(45) Veröffentlichungstag und Bekanntmachung des Hinweises auf die Entscheidung über den Einspruch: **16.08.2023**
(45) Hinweis auf die Patenterteilung: 21.10.2020
(21) Anmeldenummer: 19731712.6
(22) Anmeldetag: 17.06.2019
(51) Int. Cl.: A61C 13/00, A61F 5/56

(54) **VERFAHREN ZUR KONSTRUKTION EINES DENTALEN BAUTEILS**
METHOD FOR CONSTRUCTING A DENTAL COMPONENT
PROCÉDÉ DE RÉALISATION D'UN COMPOSANT DENTAIRE

(30) Priorität: 22.06.2018 DE 102018210258
(43) Veröffentlichungstag der Anmeldung: 11.03.2020
(73) Patentinhaber: Sirona Dental Systems GmbH, 64625 Bensheim (DE); Dentsply Sirona Inc., York, PA 17401-2991 (US)
(72) Erfinder: SCHNEIDER, Sascha, 64367 Mühltal (DE); THIEL, Frank, 64372 Ober-Ramstadt (DE)
(74) Vertreter: Özer, Alpdeniz
(86) Internationale Anmeldenummer: PCT/EP2019/065849
(87) Internationale Veröffentlichungsnummer: WO 2019/243241

(56) Entgegenhaltungen:
- EP-A1- 3 432 312
- WO-A1-2018/158411
- WO-A1-2018/175486
- WO-A1-2018/195554
- US-A1- 2018 028 294

## Beschreibung

### Technisches Gebiet

Die Erfindung betrifft ein Verfahren zur Konstruktion eines dentalen Bauteils, nämlich einer Restauration, einer Aufbissschiene oder eines Abformlöffels, wobei mittels einer dentalen Kamera oder eines Labor-Scanners eine Zahnsituation vermessen wird und ein 3D-Modell der Zahnsituation erzeugt wird.

### Stand der Technik

Aus dem Stand der Technik sind mehrere Verfahren zur Konstruktion von dentalen Bauteilen bekannt.

US 2018/0028294 A1 offenbart ein computerimplementiertes Verfahren zum Erkennen von zahnärztlichen Informationen, die mit einem zahnärztlichen Gebissmodell verknüpft sind, wobei ein neuronales Netzwerk trainiert wird, um eine Vielzahl von zahnärztlichen Trainingsmodellen auf ein Wahrscheinlichkeitsvektor abzubilden und ein Trainingsmodell einer bestimmten Kategorie zuzuordnen. Mittels des trainierten neuronalen Netzwerks wird also die Kategorie eines zahnärztlichen Modells bestimmt.

WO 2018/158411 A1 offenbart ein Verfahren zur Konstruktion einer Restauration, wobei mittels einer dentalen Kamera eine Zahnsituation vermessen und ein 3D-Modell der Zahnsituation erzeugt wird, wobei ein computergestützter Erkennungsalgorithmus auf das 3D-Modell angewendet wird, um einen Restaurationstyp bzw. eine Zahnnummer automatisch zu ermitteln. Der computergestützte Erkennungsalgorithmus kann dabei ein neuronales Netzwerk verwenden.

EP 3432312 A1 offenbart ein Verfahren zum Konstruieren eines Zahnbogens eines Patienten, wobei mehrere Zahnmodelle einer Bibliothek analysiert werden, wobei zu einem aufgenommenen 3D-Modell ein optimales Zahnmodell ausgesucht wird, wobei ein zusammengesetztes Modell erzeugt wird, wobei das bereichsweise ersetzen durch Bereich des optimalen Zahnmodells iterativ wiederholt wird. Für das Zusammensetzen des zusammengesetzten Modells aus dem aufgenommenen drei 3D-Modell und dem ausgesuchten optimalen Zahnmodell wird ein neuronales Netzwerk verwendet.

WO 2018/175486 A1 offenbart ein computerimplementiertes Verfahren zum Erzeugen eines virtuellen Modells einer kieferorthopädischen Behandlung, wobei mehrere Behandlungspläne in verschiedenen Behandlungsphasen analysiert werden, wobei basierend auf einem Vergleich von Referenzpunkten und Projektionen ein modifiziertes Bild des virtuellen Modells des Patienten konstruiert oder modelliert wird, um die kieferorthopädische Behandlung zu simulieren. Zur Segmentierung der Zähne aus den aufgenommenen 3D-Bilddaten wird ein neuronales Netzwerk verwendet.

DE 11 2014 003 898 T5 offenbart ein computerimplementiertes Verfahren zum Gestalten von Zahnrestaurationen, wobei eine Präparationsgrenze auf einer virtuellen dreidimensionalen Darstellung bestimmt wird, eine Bogenform einer virtuellen Zahnbibliothek platziert wird und eine Anfangsrestauration basierend auf einer von der virtuellen Zahnbibliothek erhaltenen Zahngestaltung vorgeschlagen wird.

Ein Nachteil dieses Verfahren besteht darin, dass die Restauration basierend auf einer virtuellen Zahnbibliothek vorgeschlagen wird und dadurch Passungenauigkeiten der Restauration für die jeweilige Zahnsituation auftreten können. Dadurch wird also eine virtuelle Nachbearbeitung des vorgeschlagenen 3D-Modells der Restauration erforderlich.

Die Aufgabe der vorliegenden Erfindung besteht daher darin, ein Verfahren zur Konstruktion eines dentalen Bauteils bereitzustellen, das zeitsparend ein passendes 3D-Modell des dentalen Bauteils vorschlägt.

### Darstellung der Erfindung

Die Erfindung betrifft ein Verfahren zur Konstruktion eines dentalen Bauteils, nämlich einer Restauration, einer Aufbissschiene oder eines Abformlöffels nach Anspruch 1.

Das Bauteil kann also eine Restauration, eine Aufbissschiene oder ein Abformlöffel sein, welches beispielsweise mittels eines CAD/CAM-Verfahrens herstellbar ist.

Die dentale Kamera kann eine beliebige dreidimensionale dentale Kamera sein, die beispielsweise auf einem Streifenprojektionsverfahren oder einem konfokalen Vermessungsverfahren beruht.

Die Zahnsituation kann die unmittelbare Umgebung der einzusetzenden Restauration oder auch einen größeren Bereich um die einzusetzende Restauration umfassen. Die Vermessung mittels der dentalen Kamera kann aus unterschiedlichen Richtungen, wie einer okklusalen Richtung, einer lingualen Richtung, einer bukkalen Richtung oder einer labialen Richtung, erfolgen.

Nach der Vermessung mittels der dentalen Kamera wird das 3D-Modell der Zahnsituation erzeugt. Anschließend wird das neuronale Netz für maschinelles Lernen auf das 3D-Modell der Zahnsituation angewendet. Nach der Analyse des 3D-Modells der Zahnsituation wird dann automatisch ein 3D-Modell des Bauteils erzeugt.

Ein künstliches neuronales Netzwerk für maschinelles Lernen (CNN) ist ein Computeralgorithmus, der die automatische Erkennung des Restaurationstyps ermöglicht.

Ein neuronales Netzwerk (CNN) ist im Wikipedia Artikel "Convolutional Neural Network" mit dem Link https://de.wikipedia.org/wiki/Convolutional Neural Network ausführlich beschrieben.

Im Folgenden wird ein Verfahren unter Verwendung eines CNN erläutert.

Ein Convolutional Neural Network (CNN), zu Deutsch "faltendes neuronales Netzwerk", ist ein feed forward künstliches neuronales Netz. Es handelt sich um ein von biologischen Prozessen inspiriertes Konzept im Bereich des maschinellen Lernens. Convolutional Neural Networks finden Anwendung in zahlreichen modernen Technologien der künstlichen Intelligenz, vornehmlich bei der maschinellen Verarbeitung von Bild- oder Audiodaten.

Grundsätzlich besteht die Struktur eines klassischen CNN aus einem Convolutional Layer, gefolgt von einem Pooling Layer. Diese Einheit kann sich prinzipiell beliebig oft wiederholen, bei ausreichend Wiederholungen spricht man dann von Deep Convolutional Neural Networks, die in den Bereich Deep Learning fallen.

Die CNN lernen dadurch, dass freie Parameter bzw. Klassifikatoren der Convolution-Kernel pro Layer und deren Gewichtung bei der Verrechnung zum nächsten Layer gelernt werden.

Das 3D-Modell der Zahnsituation wird also als Eingabe des CNN bzw. Maschinen-Learning-Systems verwendet, welches unter Verwendung einer Sammlung einer Vielzahl von 3D-Modellen unterschiedlicher Zahnsituationen trainiert wurde.

In einem weiteren Schritt wird das 3D-Modell der Zahnsituation mittels des Maschinen-Learning-Systems analysiert und als Ausgabe wird ein 3D-Modell des jeweiligen Bauteils vorgeschlagen.

Das Maschinen-Learning-System kann aus einem oder mehreren CNN-Netzwerken bestehen.

Als Eingabe für das CNN-Netzwerk können auch Farbinformationen der Zahnsituation verwendet werden. Die Farbinformationen werden dann den Oberflächenpunkten des 3D-Modells der Zahnsituation zugeordnet.

Die Klassifikatoren bzw. Merkmale werden also automatisch festgelegt und bei der Analyse des Trainingssets verfeinert. Die automatisch ermittelten Klassifikatoren eines 3D-Modells einer Zahnsituation könnten beispielsweise eine Gesamtfläche einer Präparation oder der Verlauf des Präparationsrandes oder eine Kombination aus beidem sein.

Das CNN-Netzwerk kann beispielsweise aus mehreren Layern bestehen, wobei in einem ersten Layer einfache Klassifikatoren, wie Kanten, flache Oberflächen oder Bereiche gleicher Helligkeit automatisch identifiziert werden. In einem zweiten Layer werden die Klassifikatoren automatisch verfeinert. Die Klassifikatoren im zweiten Layer können beispielsweise die relative Anordnung der Kanten zueinander, die relative Richtung der Kanten oder der Verlauf der Kanten sein. In den weiteren Layern werden die Klassifikatoren immer weiter verfeinert und werden dadurch immer komplexer. Auf diese Art und Weise lernt das CNN- Netzwerk, selbstständig anhand des 3D-Modells der Zahnsituation als Eingabeparameter automatisch ein passendes 3D-Modell des Bauteils zu erzeugen.

Die Restauration kann beispielsweise ein Inlay, eine Krone, eine Brücke, ein Abutment, ein Pontic oder ein Veneer sein.

Die Krone kann beispielsweise eine Vollkrone oder eine Teilkrone sein. Eine implantatgetragene Vollkrone wird mit einem Abutment verbunden, wobei die Innenfläche der Vollkrone eine Klebefläche für das Abutment aufweist.

Die Brücke kann beispielsweise unter Verwendung von Implantaten und Abutments am Kieferknochen befestigt werden oder an den Zahnstümpfen der benachbarten gesunden Zähne befestigt werden. Die Brücke kann festsitzend oder abnehmbar sein. Die Brücke kann auch eine Basis-Brücke sein, die aus einer Basis aus einer Metalllegierung und einem Aufbau aus Keramik oder einem Kunststoff besteht.

Ein Abutment ist ein Stützpfeiler, der als Verbindungsteil zwischen einem Zahnimplantat und einer Restauration, wie einer Zahnkrone, dient. Ein Abutment kann lösbar oder fest am Implantat befestigt werden. Implantat-Abutments können nach der Herstellungsform eingeteilt werden. Dabei wird zwischen konfektionierten, angussfähigen bzw. überpressbaren und CAD/CAM-Implantat-Abutments unterschieden. Konfektionierte Abutments werden in verschiedenen Größen, Formen und Abwinklungen sowie als beschleifbare oder nicht beschleifbare Varianten angeboten. Einteilige Implantate haben Abutments integriert. Die mittels eines CAD/CAM-Verfahrens angefertigten Abutments können sowohl in der Achsenneigung als auch in der Formgestaltung an die gegebene Zahnsituation individuell angepasst werden. Zahnfarbige Abutments finden bei ästhetischen Restaurationen, insbesondere im Frontzahnbereich Anwendung, so dass der optische Eindruck eines natürlichen Zahns möglichst nachgeahmt werden soll. Abutments werden üblicherweise aus Titan oder einer Keramik hergestellt.

Ein Veneer ist eine Verblendschale aus einer dünnen, lichtdurchlässigen Keramikschale, insbesondere für die Frontzähne.

Ein Inlay ist eine Einlagefüllung, die in einer Präparation eines Zahns eingesetzt wird. Im Gegensatz zu plastischem Füllungsmaterial, das in weicher Konsistenz mittels Formhilfen in den Zahn eingebracht wird und anschließend aushärtet ist das Inlay ein passgenaues Werkstück, das in die Präparation des Zahns eingeklebt wird.

Ein Pontic ist ein Brückenglied einer Brücke.

Die Aufbissschiene kann beispielsweise eine geführte Aufbissschiene oder eine nicht geführte Aufbissschiene sein.

Eine geführte Aufbissschiene wird in der zahnärztlichen und kieferorthopädischen Behandlung von Zähneknirschen und craniomandibulären Dysfunktionen verwendet.

Eine geführte Aufbissschiene kann beispielsweise eine Michiganschiene sein, die eingesetzt wird, um Muskelschmerzen und Gelenkschmerzen sowie eine unsichere Schlussbisslage zu vermeiden. Die Michiganschiene wirkt vor allem als Relaxionsschiene. Die Führung des Unterkiefers auf der Aufbissschiene wird meistens im Eckzahnbereich durchgeführt.

Die geführte Aufbissschiene dient also als Relaxionsschiene, um okklusale Fehlfunktionen zu unterbinden und die Kaumuskulatur zu entspannen (Verminderung des Muskeltonus). Die geführte Ausbissschiene soll auch vor der Zerstörung der Zahnhartsubstanz schützen, die durch Zähneknirschen verursacht wird.

Die Führung der Aufbissschiene wird meistens im Frontzahnbereich und/oder im Eckzahnbereich angeordnet und kann einen bestimmten Neigungswinkel relativ zu einer Einschubachse der Aufbissschiene zwischen 20 und 40 Grad aufweisen.

Eine geführte Aufbissschiene kann zur Behandlung unterschiedlicher Fehlbissstellungen, wie einem Fehlbiss mit einem zurückliegenden Unterkiefer oder einem Fehlbiss mit einem vorstehenden Unterkiefer, behandelt werden. Die Kieferanomalien können entweder angeboren oder erworben sein. Das Ausmaß des Fehlbisses wird erst beim Kieferschluss deutlich und zeigt sich beispielweise durch einen offenen Biss oder dadurch, dass die Oberkieferzähne hinter die Unterkieferzähne beißen statt umgekehrt. Die Position der Kiefer zueinander und zum Gesichtsschädel hat einen entscheidenden Einfluss auf das Gesichtsprofil. In Abhängigkeit davon, ob die Überentwicklung oder Unterentwicklung im Oberkiefer und/oder im Unterkiefer lokalisiert ist resultieren parallel zum Fehlbiss auch unterschiedliche Gesichtsprofile.

Der Abformlöffel kann ein individueller Abformlöffel sein, der auf den jeweiligen Patienten in Abhängigkeit vom 3D-Modell der Zahnsituation angepasst wird. Ein Abformlöffel wird verwendet, um einen Abdruck eines bezahnten beziehungsweisen eines unbezahnten Kiefers herzustellen.

Der Vorteil eines CNN-Netzwerks besteht darin, dass die Parameterwerte der internen Convolution-Filter und die Weiterverarbeitung der Filterausgaben bei der Analyse des Trainingssets mitgelernt werden und deshalb keine weitere Benutzerspezifikation notwendig ist.

Ein weiterer Vorteil des Verfahrens liegt darin, dass die Konstruktion des Bauteils vollautomatisch mittels des CNN-Netzwerks erfolgt. Dadurch kann also das Bauteil unmittelbar nach der optischen Vermessung vollautomatisch konstruiert werden und nach einer Kontrolle durch den Zahnarzt vollautomatisch mittels einer CAD/CAM-Vorrichtung hergestellt werden, sodass das Bauteil innerhalb einer Sitzung eingesetzt werden kann.

Ein weiterer Vorteil des Verfahrens ist, dass durch den Benutzer erzeugte fertig konstruierten Bauteile im Trainingsdatensatz des CNN verwendet werden und damit die Akzeptanzrate der Erstvorschläge der Bauteile und der Automatisierungsgrad der Konstruktion verbessert wird.

Im Folgenden wird ein mögliches Verfahren zum Training bzw. Parametrisierung des Maschinen-Learning-Systems bestehend aus einem oder mehreren CNN-Netzwerken erläutert. Im ersten Schritt wird eine große Anzahl bekannter 3D-Modelle von Zahnsituationen analysiert. Dabei werden mögliche Eingabedaten bzw. Inputdaten generiert. Die Inputdaten werden so erzeugt, dass alle möglichen Freiheitsgrade in den Inputdaten vorhanden sind. Dies wird unter Verwendung einer Data-Augmentation erreicht. Dazu werden die 3D-Modelle der Zahnsituationen um die festgelegten Freiheitsgrade rotiert und/oder entlang der Freiheitsgrade skaliert.

Die einzelnen CNN-Netzwerke werden dann auf die einzelnen 3D-Daten der einzelnen 3D-Modelle der Zahnsituationen angewendet, um die CNN-Netzwerke zu trainieren.

Das neuronale Netz wird anhand eines Trainingsdatensatzes trainiert, wobei der Trainingsdatensatz initiale 3D-Modelle von Bauteilen und manuelle Änderungen dieser initialen 3D-Modelle mindestens eines Benutzers beinhaltet. Die manuellen Änderungen werden unter Verwendung von CAD-Werkzeugen manuell durch den Benutzer bei der Konstruktion des 3D-Modells des jeweiligen Bauteils durchgeführt.

Dadurch lernt also das CNN-Netzwerk, die manuellen Änderungen eines bestimmten Benutzers auf einen initialen Vorschlag eines 3D-Modelles eines Bauteils anzuwenden, um die Konstruktion des Bauteils abzuschließen. Der initiale Vorschlag eines 3D-Modells des Bauteils kann beispielweise unter Verwendung einer Bibliothek mehrerer 3D-Modelle von Bauteilen ausgewählt werden. Bei der Anwendung des so trainierten CNN-Netzwerks auf ein unbekanntes 3D-Modell einer Zahnsituation werden dann automatisch für den jeweiligen Benutzer übliche Änderungen des Initialvorschlags durchgeführt. Die manuellen Änderungen des initialen 3D-Modells des Bauteils können beispielsweise bei einer implantatgetragenen Vollkrone die Anpassung der äußeren Abmessungen der Vollkrone an die Nachbarzähne und die Gegenzähne durch Fissur- und/oder Höckeränderungen, eine Anpassung der Innenfläche an das verwendete Abutment und/oder eine Anpassung eines Gingivarandes sein. Bei einer Aufbissschiene können die manuellen Änderungen das Glätten durch Entfernen von lokalen Höckern und bei einem Abdrucklöffel das Kürzen der Länge des Abdrucklöffels sein.

Vorteilhafterweise kann das neuronale Netz anhand eines Trainingsdatensatzes trainiert werden, wobei der Trainingsdatensatz initiale 3D-Modelle von Bauteilen und die entsprechenden 3D-Modelle der fertig konstruierten Bauteile mindestens eines Benutzers beinhaltet.

Dadurch lernt also das CNN-Netzwerk aus den Vergleichsdaten zwischen einem initialen 3D-Modell und einem fertig konstruierten 3D-Modell eines Bauteils.

Vorteilhafterweise kann das neuronale Netz anhand eines Trainingsdatensatzes trainiert wird, wobei der Trainingsdatensatz mehrere 3D-Modelle der Zahnsituationen und die entsprechenden 3D-Modelle der fertig konstruierten Bauteile mindestens eines Benutzers beinhaltet.

Dadurch kann das CNN-Netzwerk durch einen Trainingsdatensatz unterschiedlicher Benutzer trainiert werden. Die Benutzer für den Trainingsdatensatz können nach verschiedenen Kriterien, wie z.B. Berufserfahrung, ausgesucht werden. Für den Trainingsdatensatz können beispielsweise nur Daten von Benutzern verwendet werden, die mindestens drei Jahre Berufserfahrung haben oder mindestens 100 Fälle bei der Konstruktion des jeweiligen Bauteils ausgeführt haben.

Bei dieser Ausführungsform enthält der Trainingsdatensatz also lediglich die 3D-Modelle der Zahnsituationen und die entsprechenden fertigkonstruierten 3D-Modelle der Bauteile. Das CNN-Netzwerk lernt also anhand des Trainingsdatensatzes zu einem 3D-Modell der Zahnsituation ein passendes 3D-Modell des jeweiligen Bauteils zu erzeugen. Der Benutzer kann vorher die Art des Bauteils und die Position des einzusetzenden Bauteils festlegen.

Zu jeder Art eines Bauteils gibt es also für jeden Benutzer einen eigenen Trainingsdatensatz.

Vorteilhafterweise kann der Trainingsdatensatz nur die Daten eines Benutzers oder einer Gruppe von erfahrenen Benutzern enthalten.

Dadurch wird die Qualität des Trainingsdatensatzes und damit des trainierten CNN-Netzwerks verbessert.

Vorteilhafterweise kann das neuronale Netz nach dem Trainieren anhand des Trainingsdatensatzes unverändert bleiben oder dem Trainingsdatensatz neue Daten hinzugefügt werden, so dass das neuronale Netz anhand des erweiterten Trainingsdatensatzes weiter trainiert wird.

Insbesondere für unerfahrene Benutzer ist es am Anfang vorteilhaft, ein trainiertes CNN-Netzwerk nicht zu verändern. Für erfahrene Benutzer ist es vorteilhafter, ihre eigenen Daten der Konstruktion eines Bauteils einem Trainingsdatensatz hinzuzufügen, sodass das CNN-Netzwerk kontinuierlich weiter trainiert wird und die Anforderungen des jeweiligen Benutzers mit der Zeit besser erfüllt. Dem erweiterten Trainingsdatensatz werden also weitere Trainingsdaten hinzugefügt.

Vorteilhafterweise kann das Bauteil die Restauration sein, wobei die Restauration ein Inlay, eine Krone, ein Kronengerüst, eine Brücke, ein Brückengerüst, ein Abutment, ein Pontic oder ein Veneer ist.

Der Benutzer kann beispielsweise manuell die Art der Restauration auswählen und die Position der einzusetzenden Restauration in etwa festlegen. Das mit dem jeweiligen Trainingsdatensatz trainierte CNN-Netzwerk erzeugt dann ausgehend vom 3D-Modell der Zahnsituation das 3D-Modell der jeweiligen Restauration.

Vorteilhafterweise kann das 3D-Modell der Zahnsituation mindestens einen Zahn zum Einsetzen der Restauration, mindestens eine Präparation, einen Restzahn, mindestens einen Nachbarzahn, ein Abutment zum Einsetzen der herzustellenden Restauration, Farbinformationen der Zahnsituation und/oder einen Farbverlauf der Zahnsituation aufweisen.

Das 3D-Modell des jeweiligen Bauteils wird also in Abhängigkeit von den Strukturen, die im 3D-Modell der Zahnsituation enthalten sind, automatisch durch das CNN-Netzwerk konstruiert. Der Farbverlauf und die Farbinformationen der Zahnsituation können ebenfalls verwendet werden, um automatisch beispielweise die Farbe einer Vollkrone zu gestalten. Vorteilhafterweise kann das neuronale Netz eine Farbinformation und/oder einen Farbverlauf des 3D-Modells der Zahnsituation, nämlich des Restzahns und/oder mindestens eines Nachbarzahns, verwenden, um eine Farbe und/oder einen Farbverlauf für die einzusetzende Restauration automatisch festzulegen.

Dadurch wird also der Farbverlauf der einzusetzenden Restauration automatisch mittels des CNN-Netzwerks festgelegt.

Vorteilhafterweise kann das neuronale Netz für die herzustellende Restauration automatisch ein Material, ein Fertigungsverfahren, ein Einsetzungsverfahren, eine Abstichposition und/oder eine Kontaktstärke zu den Nachbarzähnen festlegen.

Das passende Material kann beispielsweise Keramik, Metall oder ein Kunststoff sein. Dabei kann beispielsweise ein passender Rohling aus einem keramischen Material zur automatischen Herstellung mittels einer CAM-Herstellungsvorrichtung ausgewählt werden. Das Fertigungsverfahren kann auch die Herstellung des Bauteils mittels eines 3D-Druckers sein.

Das Einsetzungsverfahren kann zum Beispiel Kleben, Einschrauben oder Zementieren sein.

Die Abstichposition ist die Position eines Stegs zwischen einer hergestellten Restauration und der Halterung eines Rohlings nach dem Herausfräsen der Restauration mittels einer CAM-Herstellungsvorrichtung.

Die Kontaktstärke zu den Nachbarzähnen beschreibt beispielsweise bei Brücken die Fläche eines Kontaktes zwischen zwei benachbarten Zähnen der Brücke.

Vorteilhafterweise kann der Trainingsdatensatz zusätzlich eine Farbe, einen Farbverlauf, ein Material, ein Fertigungsverfahren, ein Einsetzungsverfahren, eine Abstichposition und/oder eine Kontaktstärke zu den Nachbarzähnen der fertig konstruierten Restauration beinhalten.

Dadurch enthält der Trainingsdatensatz weitere wesentliche Informationen des Bauteils, so dass das trainierte CNN-Netzwerk ein passendes Bauteil konstruieren kann, das den Anforderungen des jeweiligen Benutzers entspricht.

Vorteilhafterweise kann das Bauteil die Aufbissschiene oder der Abformlöffel sein, wobei das 3D-Modell der Zahnsituation die Zähne zum Aufsetzen der Aufbissschiene bzw. des Abformlöffels aufweist.

Dadurch enthält der Trainingsdatensatz die Zähne zum Aufsetzen der Aufbissschiene beziehungsweise des Abformlöffels.

Vorteilhafterweise kann das neuronale Netz für die herzustellende Aufbissschiene bzw. Abformlöffel automatisch ein Material und/oder ein Fertigungsverfahren festlegen.

Dadurch wird die Dauer der Konstruktion vermindert.

Vorteilhafterweise kann das neuronale Netz eine ethnische Gruppe und/oder einen Charaktertyp des Patienten berücksichtigen.

Dadurch können charakteristische anatomische Merkmale einer ethnischen Gruppe bei der Konstruktion des jeweiligen Bauteils berücksichtigt werden. Die charakteristischen Merkmale einer ethnischen Gruppe können beispielsweise charakteristische Zahnstellung oder eine bestimmte Pigmentierung des Zahnfleisches beziehungsweise der Zähne sein.

### Kurzbeschreibung der Zeichnungen

Die Erfindung wird anhand der Zeichnungen erläutert. Es zeigt, die
- Fig. 1: eine Skizze zur Verdeutlichung des Verfahrens zur Konstruktion eines Bauteils, die
- Fig. 2: eine Skizze eines initialen 3D-Modells.

### Ausführungsbeispiele

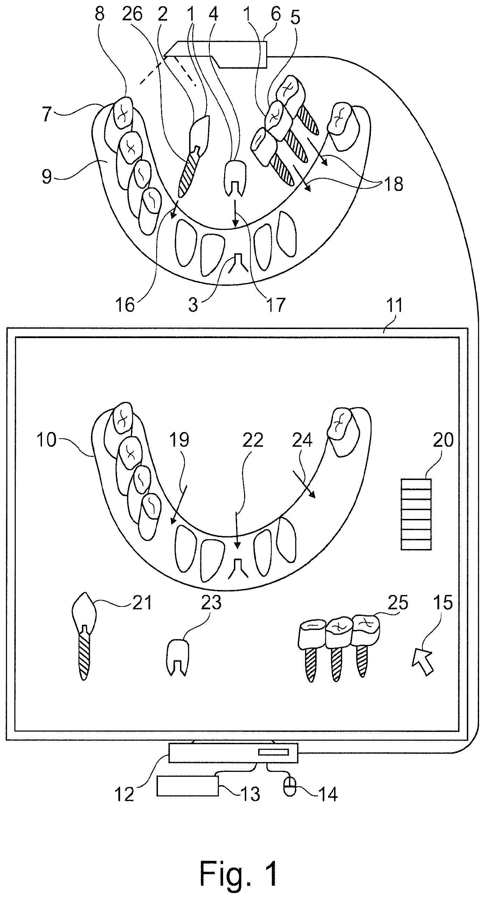

Die Fig. 1 zeigt eine Skizze zur Verdeutlichung des Verfahrens zur Konstruktion eines Bauteils 1, wie eine implantatgetragene Vollkrone 2, eine von einer Präparation 3 getragene Vollkrone 4 oder eine implantatgetragene Brücke 5. Das Bauteil 1 kann auch eine Aufbissschiene oder ein Abformlöffel sein. Mittels einer dentalen Kamera 6 wird eine Zahnsituation 7, umfassend Zähne 8 und Zahnfleisch 9 vermessen und aus den Bilddaten ein 3D-Modell 10 der Zahnsituation 7 berechnet, welches mittels einer Anzeigevorrichtung 11, wie eines Monitors, dargestellt werden kann. Die Anzeigevorrichtung 11 ist an einen Computer 12 angeschlossen, wobei ein Eingabemittel, wie eine Tastatur 13 oder eine Maus 14, an den Computer 12 angeschlossen sind und den Benutzer eine Navigation mittels eines Cursors 15 innerhalb einer grafischen Darstellung des 3D-Modells 10 ermöglichen. Die Zahnsituation 7 weist einen fehlenden Eckzahn, einen Schneidezahn mit einer Präparation 3 und drei fehlende Backenzähne des Unterkiefers auf. Eine implantatgetragene Vollkrone 2 soll also den Eckzahn ersetzen, die Vollkrone 4 auf der Präparation 3 aufgesetzt werden und die zu konstruierende Brücke 5 die fehlenden drei Backenzähne ersetzen, wie durch die Pfeile 16, 17 und 18 angedeutet ist. In einem ersten Schritt kann der Benutzer manuell mittels des Cursors 15 eine erste Position eines ersten zu konstruierenden und einzusetzenden Bauteils, nämlich eine implantatgetragene Krone 2, festlegen und die Art des Bauteils, nämlich eine implantatgetragene Krone, in einem Auswahlmenü 20 auswählen. In einem zweiten Schritt wird mittels eines neuronalen CNN-Netzes, welches anhand eines Trainingsdatensatzes für den jeweiligen Benutzer und die jeweilige Art des Bauteils trainiert wurde, automatisch ein 3D-Modell 21 des Bauteils, nämlich der implantatgetragenen Vollkrone 2, erzeugt. Entsprechend wird die Position 22 der Vollkrone 4 manuell festgelegt und die Art des Bauteils 1, nämlich eine durch eine Präparation getragene Vollkrone im Auswahlmenü 20 ausgewählt. Anschließend wird mittels des entsprechenden CNN-Netzes ein zweites 3D-Modell 23 der Vollkrone 4 erzeugt. Anschließend wird die Position 24 der einzusetzenden Brücke 5 festgelegt und die Art des Bauteils 1 aus dem Auswahlmenü 20 ausgewählt. Im weiteren Schritt wird mittels eines CNN-Netzwerkes für implantatgetragene Brücken und den jeweiligen Benutzer automatisch ein 3D-Modell 25 der Brücke 5 erzeugt. Die konstruierten Bauteile 2, 4 und 5 können dann beispielsweise automatisch mittels einer nicht dargestellten CAM-Herstellungsvorrichtung unter Verwendung der konstruierten 3D-Modelle 21, 23 und 25 aus Rohlingen hergestellt werden.

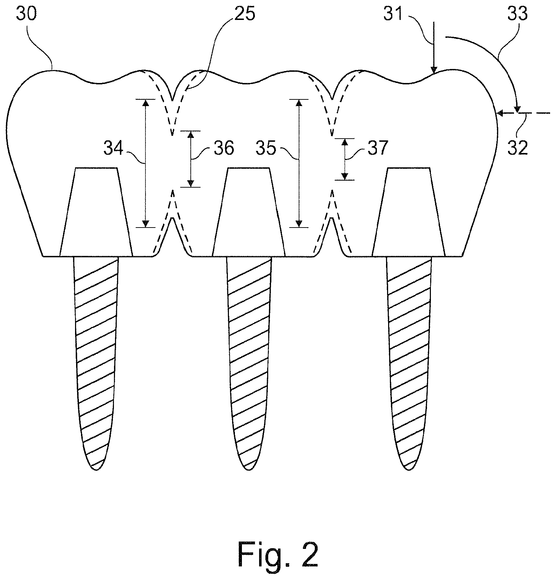

Die Fig. 2 zeigt eine Skizze eines initialen 3D-Modells 30 der Brücke 5 aus Fig. 1, wobei der Benutzer unter Verwendung von CAD-Werkzeugen manuell das initiale 3D-Modell 30 anpasst, um das gestrichelt dargestellte angepasste 3D-Modell 25 zu erzeugen, wobei eine Abstichposition 31 zu einer gestrichelt dargestellten Abstichposition 32 verschoben wird, wie durch den Pfeil 33 angedeutet ist, wobei eine Kontaktstärke 34 und 35 des initialen 3D-Modells 30 zu einer Kontaktstärke 36 und 37 des angepassten 3D-Modells 25 verkleinert wird. Eine Vielzahl solcher manuellen Änderungen beziehungsweise Anpassungen eines initialen 3D-Modells 30 für den jeweiligen Benutzer und für die jeweilige Art von Bauteilen, nämlich implantatgetragene Brücken, können dann in einem Trainingsdatensatz zusammengefasst werden, um ein dazugehöriges CNN-Netz zu trainieren. Dieses trainierte CNN-Netz, das als Programm auf dem Computer 12 läuft, kann dann verwendet werden, um ausgehend von einem initialen 3D-Modell 30 automatisch die Änderungen beziehungsweise Anpassungen durchzuführen.

### Bezugszeichen

- 1: Bauteil
- 2: implantatgetragene Vollkrone
- 3: Präparation
- 4: Vollkrone
- 5: implantatgetragene Brücke
- 6: Kamera
- 7: Zahnsituation
- 8: Zähne
- 9: Zahnfleisch
- 10: 3D-Modell
- 11: Anzeigevorrichtung
- 12: Computer
- 13: Tastatur
- 14: Maus
- 15: Cursor
- 16: Pfeil
- 17: Pfeil
- 18: Pfeil
- 19: Position der implantatgetragenen Vollkrone
- 20: Auswahlmenü
- 21: 3D-Modell der implantatgetragenen Vollkrone
- 22: Position der Vollkrone
- 23: 3D-Modell der Vollkrone
- 24: Position der Brücke
- 25: 3D-Modell der Brücke
- 26: Implantat
- 30: initiales 3D-Modell
- 31: Abstichposition
- 32: Abstichposition
- 33: Pfeil
- 34: Kontaktstärke
- 35: Kontaktstärke
- 36: Kontaktstärke
- 37: Kontaktstärke

## Patentansprüche

1. Verfahren zur Konstruktion eines dentalen Bauteils (1, 2, 4, 5), nämlich einer Restauration (2, 4, 5), einer Aufbissschiene oder eines Abformlöffels, wobei eine Zahnsituation (7) vermessen wird und ein 3D-Modell (10) der Zahnsituation (7) erzeugt wird, **dadurch gekennzeichnet, dass** ein künstliches neuronales Netz für maschinelles Lernen (engl. Convolutional Neural Network; CNN) auf das 3D-Modell (10) der Zahnsituation (7) und ein initiales 3D-Modell (30) des Bauteils angewendet wird und automatisch ein fertig konstruiertes 3D-Modell (21, 23, 25) des Bauteils (1, 2, 4, 5), nämlich der Restauration (2, 4, 5), der Aufbissschiene oder des Abformlöffels, erzeugt, wobei das neuronale Netz anhand eines Trainingsdatensatzes trainiert wird, wobei der Trainingsdatensatz initiale 3D-Modelle (30) von Bauteilen (5) und manuelle Änderungen (33) dieser initialen 3D-Modelle (30) bei der Konstruktion des 3D-Modells (25) mindestens eines Benutzers beinhaltet.

2. Verfahren nach Anspruch 1, **dadurch gekennzeichnet, dass** der Trainingsdatensatz nur die Daten eines Benutzers oder einer Gruppe von erfahrenen Benutzern enthält.

3. Verfahren nach Anspruch 1 oder 2, **dadurch gekennzeichnet, dass** das neuronale Netz nach dem Trainieren anhand des Trainingsdatensatzes unverändert bleibt.

4. Verfahren nach einem der Ansprüche 1-3, **dadurch gekennzeichnet, dass** dem Trainingsdatensatz neue Daten hinzugefügt werden, so dass das neuronale Netz anhand des erweiterten Trainingsdatensatzes weiter trainiert wird.

5. Verfahren nach einem der Ansprüche 1-4, **dadurch gekennzeichnet, dass** das Bauteil die Restauration (2, 4, 5) ist, wobei die Restauration ein Inlay, eine Krone (2, 4), ein Kronengerüst, eine Brücke (5), ein Brückengerüst, ein Abutment, ein Pontic oder ein Veneer ist.

6. Verfahren nach Anspruch 5, **dadurch gekennzeichnet, dass** das 3D-Modell (10) der Zahnsituation (7) mindestens einen Zahn (8) zum Einsetzen der Restauration (2, 4, 5), mindestens eine Präparation (3), einen Restzahn, mindestens einen Nachbarzahn, ein Abutmentzum Einsetzen der herzustellenden Restauration, Farbinformationen der Zahnsituation (7) und/oder einen Farbverlauf der Zahnsituation (7) aufweist.

7. Verfahren nach Anspruch 6, **dadurch gekennzeichnet, dass** das neuronale Netz eine Farbinformation und/oder einen Farbverlauf des 3D-Modells (10) der Zahnsituation (7), nämlich des Restzahns und/oder mindestens eines Nachbarzahns, verwendet, um eine Farbe und/oder einen Farbverlauf für die einzusetzende Restauration automatisch festzulegen.

8. Verfahren nach einem der Ansprüche 5-7, **dadurch gekennzeichnet, dass** das neuronale Netz für die herzustellende Restauration automatisch ein Material, ein Fertigungsverfahren, ein Einsetzungsverfahren, eine Abstichposition (31) und/oder eine Kontaktstärke (34, 35) zu den Nachbarzähnen festlegt.

9. Verfahren nach einem der Ansprüche 5-8, **dadurch gekennzeichnet, dass** der Trainingsdatensatz zusätzlich eine Farbe, einen Farbverlauf, ein Material, ein Fertigungsverfahren, ein Einsetzungsverfahren, eine Abstichposition (31) und/oder eine Kontaktstärke (34, 35) zu den Nachbarzähnen der fertig konstruierten Restauration beinhaltet.

10. Verfahren nach einem der Ansprüche 1-9, **dadurch gekennzeichnet, dass** das Bauteil die Aufbissschiene oder der Abformlöffel ist, wobei das 3D-Modell der Zahnsituation die Zähne zum Aufsetzen der Aufbissschiene bzw. des Abformlöffels aufweist.

11. Verfahren nach Anspruch 10, **dadurch gekennzeichnet, dass** das neuronale Netz für die herzustellende Aufbissschiene bzw. den Abformlöffel automatisch ein Material und/oder ein Fertigungsverfahren festlegt.

12. Vorrichtung zur Datenverarbeitung, umfassend Mittel zur Ausführung des Verfahrens nach einem der Ansprüche 1-11.

13. Computerprogramm, umfassend Befehle, die bei der Ausführung des Computerprogramms durch einen Computer diesen veranlassen, das Verfahren nach einem der Ansprüche 1-11 auszuführen.

14. Computerlesbares Speichermedium, umfassend Befehle, die bei der Ausführung durch einen Computer diesen veranlassen, das Verfahren nach einem der Ansprüche 1-11 auszuführen.

## Claims

1. A method for constructing a dental component (1, 2, 4, 5), namely a restoration (2, 4, 5), a bite guard or an impression tray, wherein a dental situation (7) is measured and a 3D model (10) of the dental situation (7) is generated, **characterised in that** a convolutional neural network (CNN) is applied to the 3D model (10) of the dental situation (7) and an initial 3D model (30) of the component and a fully constructed 3D model (21, 23, 25) of the component (1, 2, 4, 5), namely the restoration (2, 4, 5), the bite guard or the impression tray, is automatically generated, the neural network being trained on the basis of a training data set, and the training data record containing initial 3D models (30) of components (5) and manual changes (33) of these initial 3D models (30) in the construction of the 3D model (25) of at least one user.

2. The method according to claim 1, **characterised in that** the training data set only contains the data of one user or a group of experienced users.

3. The method according to claim 1 or 2, **characterised in that** the neural network remains unchanged after the training on the basis of the training data set.

4. The method according to any one of claims 1 to 3, **characterised in that** new data is added to the training data set, so that the neural network is trained further on the basis of the expanded training data set.

5. The method according to any one of claims 1 to 4, **characterised in that** the component is the restoration (2, 4, 5), the restoration being an inlay, a crown (2, 4), a crown structure, a bridge (5), a bridge structure, an abutment, a pontic or a veneer.

6. The method according to claim 5, **characterised in that** the 3D model (10) of the dental situation (7) has at least one tooth (8) for inserting the restoration (2, 4, 5), at least one preparation (3), a residual tooth, at least one neighbouring tooth, an abutment for inserting the restoration to be produced, colour information of the dental situation (7) and/or a colour gradient of the dental situation (7).

7. The method according to claim 6, **characterised in that** the neural network uses colour information and/or a colour gradient of the 3D model (10) of the dental situation (7), namely the residual tooth and/or at least one neighbouring tooth, to automatically define a colour and/or a colour gradient for the restoration to be inserted.

8. The method according to any one of claims 5 to 7, **characterised in that** the neural network for the restoration to be produced automatically defines a material, a production method, an insertion method, a tapping position (31) and/or a contact strength (34, 35) to the neighbouring teeth.

9. The method according to any one of claims 5 to 8, **characterised in that** the training data set additionally contains a colour, a colour gradient, a material, a production method, an insertion method, a tapping position (31) and/or a contact strength (34, 35) to the neighbouring teeth of the pre-constructed restoration.

10. The method according to any one of claims 1 to 9, **characterised in that** the component is the bite guard or the impression tray, the 3D model of the dental situation comprising the teeth for fitting the bite guard or the impression tray.

11. The method according to claim 10, **characterised in that** the neural network automatically defines a material and/or a production method for the bite guard to be produced or the impression tray.

12. A device for data processing, comprising means for executing the method according to any one of claims 1 to 11.

13. A computer program, comprising commands, which, when the computer program is executed by a computer, cause said computer to execute the method according to any one of claims 1 to 11.

14. A computer-readable storage medium, comprising commands, which, when executed by a computer, cause said computer to execute the method according to any one of claims 1 to 11.

## Revendications

1. Procédé de réalisation d'un composant dentaire (1, 2, 4, 5), à savoir une restauration (2, 4, 5), une gouttière occlusale ou un porte-empreinte, une situation dentaire (7) étant mesurée et un modèle 3D (10) de la situation dentaire (7) étant généré, **caractérisé en ce qu'**un réseau neuronal artificiel (Convolutional Neural Network ; CNN) pour l'apprentissage automatique est utilisé sur le modèle 3D (10) de la situation dentaire (7) et un modèle 3D initial (30) du composant et un modèle 3D entièrement réalisé (21, 23, 25) du composant (1, 2, 4, 5), à savoir la restauration (2, 4, 5), la gouttière occlusale ou le porte-empreinte, est généré automatiquement, le réseau neuronal étant entraîné sur la base d'un ensemble de données d'apprentissage, l'ensemble de données d'apprentissage contenant des modèles 3D initiaux (30) des composants (5) et des modifications manuelles (33) de ces modèles 3D initiaux (30) dans la réalisation du modèle 3D (25) d'au moins un utilisateur.

2. Procédé selon la revendication 1, **caractérisé en ce que** l'ensemble de données d'apprentissage ne contient que les données d'un utilisateur ou d'un groupe d'utilisateurs expérimentés.

3. Procédé selon la revendication 1 ou 2, **caractérisé en ce que** le réseau neuronal reste inchangé après l'entraînement sur la base de l'ensemble de données d'apprentissage.

4. Procédé selon l'une quelconque des revendications 1 à 3, **caractérisé en ce que** de nouvelles données sont ajoutées à l'ensemble de données d'apprentissage, de sorte que le réseau neuronal est entraîné davantage sur la base de l'ensemble de données d'apprentissage étendu.

5. Procédé selon l'une quelconque des revendications 1 à 4, **caractérisé en ce que** le composant est la restauration (2, 4, 5), la restauration étant un inlay, une couronne (2, 4), une armature de couronne, un bridge (5), une armature de bridge, un pilier, un pontique ou une facette.

6. Procédé selon la revendication 5, **caractérisé en ce que** le modèle 3D (10) de la situation dentaire (7) présente au moins une dent (8) pour insérer la restauration (2, 4, 5), au moins une préparation (3), une dent résiduelle, au moins une dent voisine, un pilier pour insérer la restauration à réaliser, des informations de couleur de la situation dentaire (7) et/ou un dégradé de couleurs de la situation dentaire (7).

7. Procédé selon la revendication 6, **caractérisé en ce que** le réseau neuronal utilise une information de couleur et/ou un gradient de couleur du modèle 3D (10) de la situation dentaire (7), à savoir de la dent résiduelle et/ou au moins d'une dent voisine, pour définir automatiquement une couleur et/ou un dégradé de couleurs pour la restauration à mettre en place.

8. Procédé selon l'une quelconque des revendications 5 à 7, **caractérisé en ce que** le réseau neuronal pour la restauration à réaliser définit automatiquement un matériau, un processus de production, un processus d'insertion, une position d'obturation (31) et/ou une force de contact (34, 35) avec les dents voisines.

9. Procédé selon l'une quelconque des revendications 5 à 8, **caractérisé en ce que** l'ensemble de données d'apprentissage comprend en outre une couleur, un dégradé de couleurs, un matériau, un processus de fabrication, un processus d'insertion, une position d'obturation (31) et/ou une force de contact (34, 35) avec les dents voisines de la restauration entièrement réalisée.

10. Procédé selon l'une quelconque des revendications 1 à 9, **caractérisé en ce que** le composant est la gouttière occlusale ou le porte-empreinte, le modèle 3D de la situation dentaire présentant les dents pour ajuster la gouttière occlusale ou le porte-empreinte.

11. Procédé selon la revendication 10, **caractérisé en ce que** le réseau neuronal définit automatiquement un matériau et/ou un procédé de fabrication pour la gouttière occlusale ou le porte-empreinte à produire.

12. Dispositif de traitement de données, comprenant des moyens pour mettre en oeuvre le procédé selon l'une quelconque des revendications 1 à 11.

13. Programme informatique, comprenant des instructions qui, lorsque le programme informatique est exécuté par un ordinateur, amènent ce dernier à exécuter le procédé selon l'une quelconque des revendications 1 à 11.

14. Support de stockage lisible par ordinateur comprenant des instructions qui, lorsqu'elles sont exécutées par un ordinateur, amènent ce dernier à exécuter le procédé selon l'une quelconque des revendications 1 à 11.
